Europäisches Patentamt

European Patent Office

Office européen des brevets

(11) Publication number: **0 042 195**
**B1**

## (12) EUROPEAN PATENT SPECIFICATION

(45) Date of publication of patent specification: **21.08.85**

(21) Application number: **81200659.1**

(22) Date of filing: **11.06.81**

(51) Int. Cl.⁴: **A 01 D 78/10**

(54) Crop treating device.

(30) Priority: **12.06.80 NL 8003425**

(43) Date of publication of application:
**23.12.81 Bulletin 81/51**

(45) Publication of the grant of the patent:
**21.08.85 Bulletin 85/34**

(84) Designated Contracting States:
**DE FR GB NL**

(56) References cited:
**AT-B- 352 459**
**DE-A-2 027 316**
**DE-A-2 359 574**
**FR-A-2 137 369**
**FR-A-2 192 755**
**FR-A-2 218 817**
**FR-A-2 329 186**
**FR-A-2 369 788**
**GB-A-2 029 189**
**NL-A-7 500 381**

(73) Proprietor: **Multinorm B.V.**
**Hoofdweg 1278 P.O. Box 1**
**NL-2150 AA Nieuw-Vennep (NL)**

(72) Inventor: **Winkel, Jan**
**Nagtegaallaan 22**
**NL-2172 JR Sassenheim (NL)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a device for treating crop lying on the ground comprising at least one carrier rotatably driven about an upstanding shaft and having a plurality of upright stubs arranged in a circle on it, about each of which are pivotable one or more tines in overlying position held with adjustment in an outwardly directed position by an independent resilient element, one end of which is fastened to a common support of the tines whereas the other end is adjustable in different angular positions with respect to said stub.

In a known device of the kind set forth in GB—A—2,029,189 the tines together with the resilient elements are arranged on the carrier so as to be pivotable in a vertical plane, whilst the tines automatically swing outwardly owing to centrifugal force. Owing to the freedom of vertical movement of the tines the latter can work the ground through a more or less wide arc of a circle, when the upstanding shaft is set in a slanting position. The ground pressure of the tine is determined by the mass tending to swing outwards by the action of the centrifugal force.

The invention has for its object to reduce said mass so that the ground pressure will be lower in order to avoid damage of the ground and the stubbles.

The device embodying the invention is that characterised in that at least, on each upright stub which is fastened to the carrier, the lowermost tine is pivotable about a horizontal pin accommodated on the common support of the tines, said common support being a sleeve rotatable about the upright stub, such mounting allowing a free movement of said tine in the vertical plane.

In this embodiment it is now possible to impart to the resilient element a fixed working position relative to the carrier, only the tine itself maintaining the required freedom of vertical movement. Therefore, in the vertical plane, to cooperating mass is limited to that of the pivotable tine. Furthermore DE—A—2,359,574 relates to a haymaking device having sets of tines in overlying relationship. The sets of tines are each allowed to pivot on a standing stub so as to bring the tines in a certain working position. The setting of the tines can be done centrally. In an embodiment (fig. 13) the set is further allowed to pivot in a vertical plane. However, also here, there is no resilient element distinguishable from the tines disclosed in this reference.

By using said sleeve the location of the lying pivot pin and the action of the resilient element can be adjusted to one another to the optimum.

From FR—A—2,369,788 it is known to arrange a plurality of tines in overlying relationship. The lowermost tine is allowed to pivot about an axis tangential to the carrier, but here no single distinguishable resilient element is used to keep all the tines in the working position.

In order to maintain a given ground pressure the lowermost tine or the prolongation thereof extends above the pivot pin, whilst the sleeve is provided with a stop. Because the stop is arranged on the sleeve the relative positions of stop and tine will not change in any working position, which ensures the desired ground pressure and reduces wear or damage of the tine. Preferably, the or each tine is fastened to the holder so as to be exchangeable.

In a preferred embodiment the support rotatable about the upstanding stub is formed by two or more non-rotatably interconnected parts, upper tines being fastened to the upper parts. This structure not only ensures a ready exchangeability of the tines, which may be important in the event of damage, but also permits of manufacturing the upper tines together with the sleeve parts as a single unit from a synthetic resin, which reduces the cost price.

In order to obtain various angular settings of the tines with respect to the carrier, the resilient element connected at one end to the sleeve is coupled by its other end with a body adapted to turn on the upstanding shaft with respect to the carrier so that the angle of the resilient element to the upstanding pin can be varied and hence also the angle of the tine to the standing pin.

The rotatable body is preferably constructed in the form of a central ring with which all other ends of the resilient elements are connected. In this way a simultaneous central adjustment of all tines is obtained.

According to the invention the upstanding stubs for the pivotable tines are arranged in two annular elements arranged one above the other and forming part of the carrier. The upper annular element may be constructed in the form of part of a closed hood, which ensures that the crop readily slides off the rotor and will not be retained and wound up.

If the device is equipped with a skid on the lower side of the upstanding shaft, this skid is, in accordance with the invention, adjustable with respect to said shaft. In this way the optimal position of the tines relative to the ground and hence the correct ground pressure of the tines are obtained.

In a preferred embodiment the skid is connected by means of a hinge with the upstanding shaft, the hinge shaft being located in front of the upstanding shaft viewed with respect to the direction of movement. This construction is advantageous in adjusting the height of the carrier with respect to the ground as well as in adjusting the angle between the upstanding shaft and the horizontal for moving the carrier with the pivotable tines fastened thereto into the correct position for a given job.

In order to facilitate the maniability a locking member is provided for locking the adjusted height of the skid with respect to the upstanding shaft near said shaft.

The invention will be described more fully with reference to the following figures illustrating a few embodiments.

Fig. 1 a standing sectional view of the device embodying the invention,

Fig. 2 a perspective plan view of the carrier with the working tines of the device of fig. 1,

Fig. 3 a perspective view of a detail of the suspension of the tines to the carrier,

Fig. 4 an elevational view like fig. 3 of an alternative embodiment,

Fig. 5 a detail view taken on the line IV—IV in fig. 2,

Fig. 6 a plan view of a second alternative embodiment of the suspension of the tines to the carrier,

Fig. 7 a sectional view taken on the line VII—VII in fig. 6,

Fig. 8 a perspective plan view of the lower end of the upstanding shaft with the dished skid of the device of fig. 1 fastened to said shaft.

The device shown in the figures mainly comprises a frame 1, which is hitched in any desired manner with an agricultural tractor and which is provided with two or more gear boxes 2. Each gear box accommodates a bevel gear transmission 3, the pinion of which is in engagement through a toothed shaft 4 with the power take-off shaft of the agricultural tractor. The wheel of the bevel gear transmission 3 is connected with a carrier 6 adapted to rotate about an upstanding shaft 5 fixedly arranged in the gear box 2, said carrier being provided with tine-like working members 7. The lower end of the standing shaft 5 is pivoted to a supporting skid 8, which slides along the ground in operation.

The carrier 6 mainly comprises a lower, annular element 10, to which upstanding stubs 11 are fastened at equal intervals along the circumference.

The top ends of the stubs 11 are fastened in a second, annular element 12, which is the circumferential flange of a closed cover 13. The lower, annular element 10 is connected through spokes 14 with a coupling flange 15, which is bolted to the lower bevel gear wheel of the transmission 3.

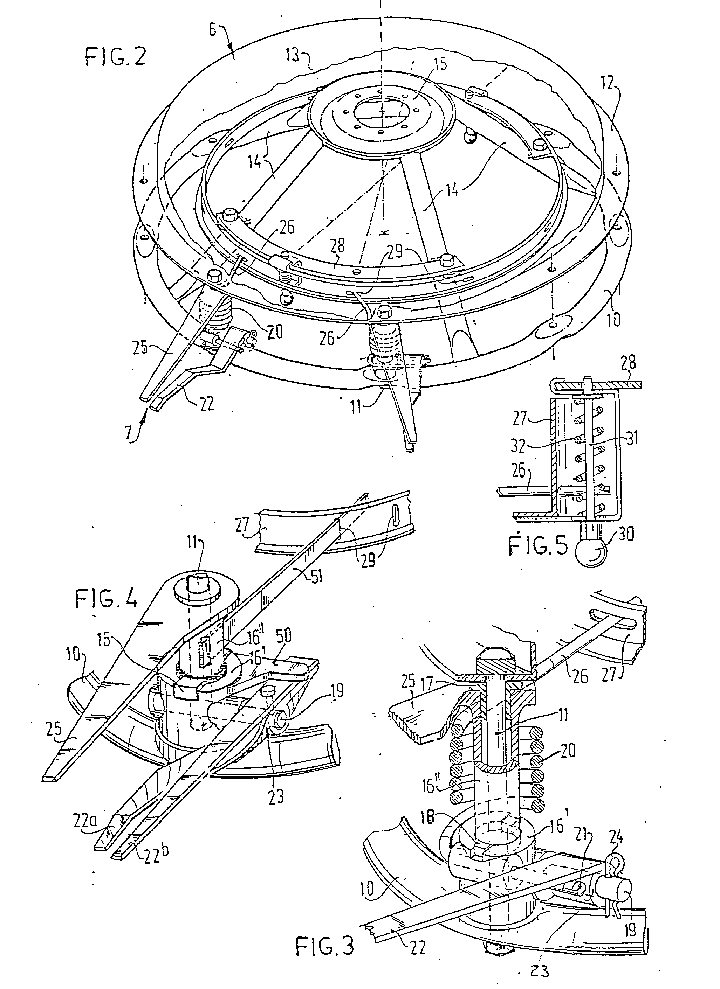

From fig. 3 it will be apparent that a sleeve 16 is rotatably arranged on each stub 11, for example, by means of synthetic resin sliding bearings 17 on the top and bottom sides. The sleeve 16 comprises a thickened lower part 16' and an upper, slender part 16" non-rotatably connected with the former through a cam joint 18.

The lower part 16' has a hole directed transversely of the stub 11 for accommodating a lying stub shaft 19 and furthermore an uninterrupted hole on the outer side for receiving one end 21 of a helical spring 20 arranged around the upper, slender part 16". The end 21 of the helical spring 20 emerges from the sleeve 16 so as to form a stop, which will be described more fully hereinbelow. The lower tine 22 of the working members 7 consists of a flat strip of material, which is fastened on the inner side to the top side of a holder 23, which is slipped onto the lying shafts 19. By means of a guard clamp 24 the tine is coupled via the pin 19 with the sleeve 16 and is capable of freely turning up and down in a vertical plane. The protruding end 21 of the helical spring 20 limits the downward movement of the tine 22 and thus determines the lowermost position of the tine 22. Owing to the centrifugal force produced by the rotation of the carrier 6 and since the tine 22 is fastened to the top side of the holder 23 the tine 22 tends to tilt down to the pin 21.

The slender upper part 16" is rigidly connected with the upper tine 25 of the working members 7 and preferably manufactured integrally with said upper tine from a synthetic resin.

As a matter of course, a plurality of sleeve parts 16 may be arranged in superposition, each part holding a tine.

From the description of the construction it will be apparent that the lowermost tine is capable of freely following the ground contour owing to its freedom of movement in a vertical sense. The upper tine or tines maintain their vertical positions.

From fig. 2 it will be apparent that the tines 22 and 25 respectively are parallel to one another at their ends. The construction described permits of manufacturing the lowermost tine 22 from wear-resistant, hard material, whereas the upper tines may be made from a synthetic resin.

Fig. 4 shows an alternative embodiment in which corresponding parts are designated by the same reference numerals.

The sleeve part 16' rotatably holds the lying pivot pin 19 which is welded to a bracket-shaped tine holder 23. To the holder are releasably bolted two tines 22a and 22b. Like the tine 25 the upper tine 22b may be of a synthetic resin and the lowermost tine 22a, on the contrary, of a metal or a solid, wear-resistant material.

Viewed in a side elevation, the stop 50 fastened to the top of the sleeve part 16' is located between the pivot pin 19 and the upstanding shaft 5 and has otherwise the same function as the stop 21 of fig. 3. The resilient element 51 is formed in this case by a leaf spring inserted into the upper sleeve part 16".

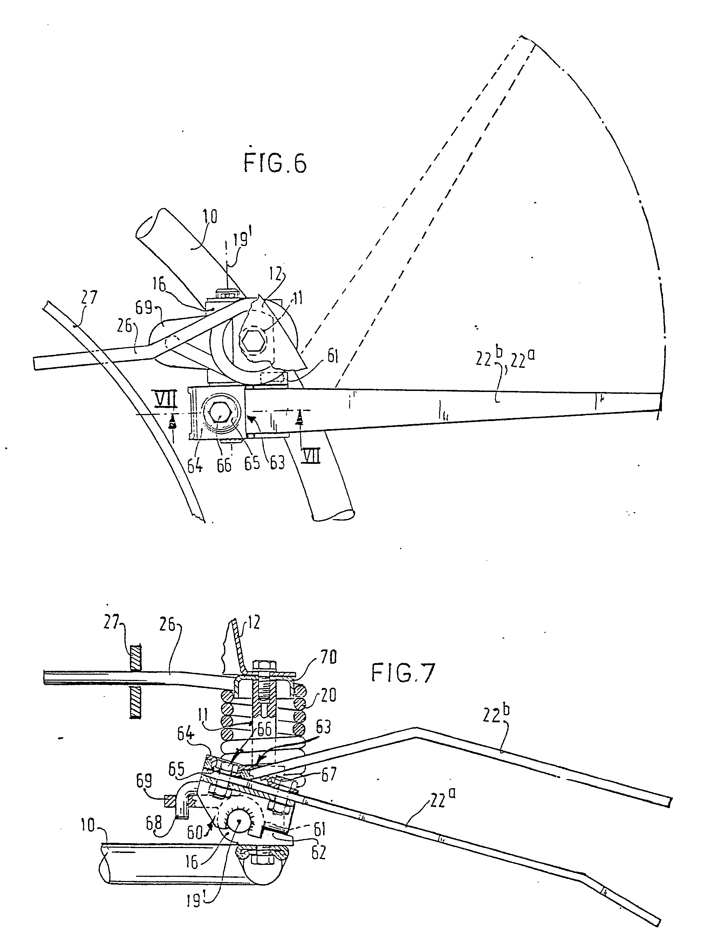

The angular setting of the tines 22, 25 relative to the stub 11 is guarded by the other end 26 of the resilient element 20, 51 being inserted into a body 27, which is rotatable with respect to the upstanding shaft 5 (see also fig. 2). This rotatable body has the form of a circular flange, which is slidably suspended to the spokes 14 by means of two arcuate strips 28 fastened to said spokes. The flange 27 has elongate holes 29, through which the ends 26 are passed. By means of manual adjustment (see fig. 5) the ring 27 can be fixed in the desired position relative to the strip 28. This manual adjustment is performed by means of a pin 31 provided with a handle 30, the top end of said pin snapping into a hole of the strip 28 by the action of a compression spring 32 as soon as the pin registers with the hole during the displacement of the ring 27. Discoupling can be performed by drawing the pin 31 down by means of the handle 30 and by subsequently displacing the ring 27. Owing to this displacement the end 26 is moved resulting in a turn of the resilient element 20 around the stub 11 and hence of the sleeve 16, which is coupled with the end 21 of the spring.

The tines 22 and 25 respectively follow the sleeve 16.

Fig. 6 and 7 show a second alternative embodiment of the tine suspension. The same reference numerals are used in these figures. The tine-group 22a, 22b are disengageable fastened to a support 60, to which the lying pivot pin 19' is welded. The lying pivot pin is arranged in the sleeve 16 rotatable about the stub 11, such that the tines 22a, 22b are freely movable in a vertical plane. The downwards movement of the tine-group is limited by a bracket 61 on the support 60, said bracket being adapted to contact a flat surface 62 of the sleeve 16.

Preferably the upper tine 22b is made from synthetic resin, for instance polyamide (nylon). In order to ensure a rigid mounting of the nylon tine upon the support 60, said tine is inserted into a slitlike opening 63 of a clamping platen 64. Further said platen 64 is profiled such that an indentation 65 fits in a throughhole in the tine body 22b. The dimensions are such that said indentation 65 directly rests upon the upperface of tine 22a after the bolt 66 is fastened. At the underside of the tine 22b the clamping platen 64 is provided with a support rim 67 near the opening 63, which guides the bending of the tine 22b so preventing damage of the tine material near the fastening place. Owing to the suggested structure the clamping forces upon the tine 22b are avoided whereas the tine is held by the particular form of the platen 64 only. A certain fastening during a long time is ensured so.

The bended end portion 68 of the helical spring 20 around the stub 11 protrudes into a hole of an arm 69 of the sleeve 16. The other end portion 26 of the helical spring 20 protrudes in a hole of the adjustment ring 27 as described above. The helical spring 20 is centered by the sleeve portion 16 near the lower end, and by a cup-like element 70 bolted onto the stub 11 near the upper end. The working of the tine suspension is similar to the working of the previous described embodiment.

The lower end of the upstanding shaft 5 has fastened to it a sleeve 33, to which are fastened in fork-like fashion two hinge wings 34. The end of the wings 34 remote from the sleeve 33 has a hole for receiving a pivot pin 35, which is journalled in supports 36 welded to the inner side of the dish-like skid 8. The supports 36 are prolonged in the direction towards the upstanding shaft 5 and their free, standing edges 37 have a plurality of recesses 38.

Below the sleeve 33 a pin 39 is journalled in wings 34, said pin supporting a hub 40, to which a handle 41 is welded. To the side opposite the handle 41 is welded a plate 42, the front edge of which cooperates with the recesses 38 of the supports 36. At the centre, near the front edge of the plate 42, a tensile spring 43 is provided, the other side of which is hooked to the pin 35.

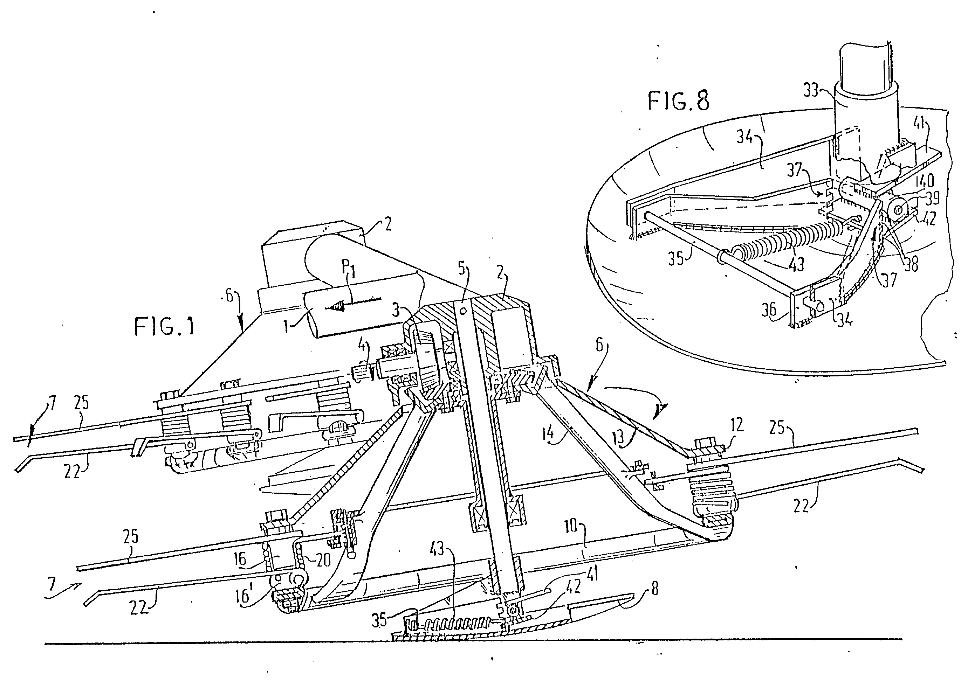

From the figures it will be apparent that by drawing upwards the handle 41 the plate 42 is lifted out of a recess 38 so that the dish-like skid 8 can turn downwards or upwards about the pin 35 with respect to the upstanding shaft 5. At the release of the handle 41 the spring 43 draws the plate again into a recess 38. From fig. 1 it appears that viewed in the direction of movement indicated by the arrow P 1 the pivots 35 are located in front of the upstanding shaft 5.

## Claims

1. A device for treating crop lying on the ground comprising at least one carrier (6) rotatably driven about an upstanding shaft (5) and having a plurality of upright stubs (11) arranged in a circle on it, about each of which are pivotable one or more tines (22, 25), in overlying position held with adjustment in an outwardly directed position by an independent resilient element (20, 51), one end of which is fastened to a common support of the tines (7) whereas the other end is adjustable in different angular positions with respect to said stub, characterised in that at least, on each upright stub (11) which is fastened to the carrier the lowermost tine (22) is pivotable about a horizontal pin (19, 19') accommodated on the common support of the tines, said common support being a sleeve (16) rotatable about the upright stub (11), such mounting allowing a free movement of said tine in the vertical plane.

2. A device as claimed in claim 1 characterized in that the lowermost tine (22) or the prolongation thereof extends above the pivot pin (19) and in that a stop (21, 50, 62) is provided on the sleeve.

3. A device as claimed in claims 1—2, characterized in that the or each tine (22, 25) is fastened to the sleeve (16) so as to be exchangeable.

4. A device as claimed in claims 1—3, characterized in that the sleeve (16) rotatable about the upstanding stub (11) is formed by two or more non-rotatably interconnected parts (16', 16") standing one on the other, upper tines (25) being fastened, if necessary, to the upper parts (16").

5. A device as claimed in claim 4 characterized in that an upper sleeve part (16") and an upper tine (25) associated herewith are integrally manufactured from a synthetic resin.

6. A device as claimed in any one of the preceding claims characterized in that the other end of the resilient element (26) is connected with a body (27) adapted to turn about the upstanding shaft (5) with respect to the carrier.

7. A device as claimed in claim 6 characterized in that said body is formed by a ring (27) accommodating all other ends (26) of the resilient means.

8. A device as claimed in any one of the preceding claims characterized in that the resilient element is formed by a helical spring.

9. A device as claimed in claim 8 characterized in that the turns of the helical spring extend around the sleeve (16).

10. A device as claimed in claim 9, characterized in that the upper end of the helical spring is centered by means of a centering body (70) fastened to the upper end portion of the stub (11).

11. A device as claimed in any one of the preceding claims, characterized in that in a pair of overlying tines (22a, 22b) the upper one (22b) is disengageably fastened upon the lower tine (22a) by means of a clamping platen (64).

12. A device as claimed in claim 11, characterized in that the clamping platen is provided with a slit-like through-hole (63), through which the upper tine (22b) is inserted.

13. A device as claimed in claim 11 and 12, characterized in that said clamping platen (64) is provided with an indentation (65) fitting in a through-hole of the upper tine (22b) such that the clamping platen is adapted to rest upon the lower tine (22a).

14. A device as claimed in any one of the preceding claims, characterized in that the carrier (6) is provided with two annular elements (10—12) arranged one above the other, in which the ends of the upstanding stubs are fastened.

15. A device as claimed in claim 14 characterized in that the upper annular element (12) is the peripheral flange of a closed hood (13).

16. A device as claimed in any one of the preceding claims comprising a skid (8) at the lower end of the upstanding shaft (5) characterized in that the skid is displaceable in a direction of height with respect to the upstanding shaft (5).

17. A device as claimed in claim 16 characterized in that the skid (8) is connected by means of a hinge (34, 35) with the lower side of the upstanding shaft.

18. A device as claimed in claims 16 and 17 characterized in that viewed in the direction of movement, the hinge pivot shaft (35) is located in front of the upstanding shaft (5).

19. A device as claimed in claims 16—18, characterized in that a locking member (42) is located at or near the centre of the skid (8).

## Revendications

1. Dispositif pour traiter des végétaux jonchant le sol, du type comprenant au moins un support (6) qui est entraîné en rotation autour d'un arbre vertical (5) et qui présente plusieurs axes verticaux (11) qui sont disposés en cercle sur lui et autour de chacun desquels sont montées pivotantes une ou plusieurs dents (22, 25) superposées entre elles et maintenues de manière réglable suivant une position orientée vers l'extérieur, à l'aide d'un organe élastique indépendant (20, 51), dont une extrémité est fixée sur un élément commun de soutien des dents (7), tandis que son autre extrémité est réglable suivant différentes positions angulaires par rapport audit axe, caractérisé en ce que, sur chaque axe vertical (11) qui est fixé sur le support, au moins la dent la plus basse (22) peut basculer autour d'un doigt horizontal (19, 19') qui est monté sur l'élément commun de soutien des dents constitué par un manchon (16) pouvant tourner autour de l'axe vertical (11), ce montage permettant un mouvement libre de ladite dent dans un plan vertical.

2. Dispositif tel que revendiqué dans la revendication 1, caractérisé en ce que la dent la plus basse (22) ou son prolongement s'étend au-dessus du doigt de pivotement (19) et en ce qu'il est prévu sur le manchon, une butée (21, 50, 62).

3. Dispositif tel que revendiqué dans les revendications 1 à 2, caractérisé en ce que chaque dent (22, 25) se trouve fixée sur le manchon (16) de manière à être interchangeable.

4. Dispositif tel que revendiqué dans les revendications 1 à 3, caractérisé en ce que le manchon (16) qui peut tourner autour de l'axe vertical (11) est constitué par deux ou plus de deux parties (16', 16") qui sont reliées entre elles de manière à ne pas pouvoir tourner l'une par rapport à l'autre et qui sont disposées l'une au-dessus de l'autre, les dents supérieures (25) étant si nécessaire fixées sur les parties supérieures (16").

5. Dispositif tel que revendiqué dans la revendication 4, caractérisé en ce qu'une partie supérieure de manchon (16") et une dent supérieure (25) associée à celle-ci sont réalisées en une seule pièce, en résine synthétique.

6. Dispositif tel que revendiqué dans n'importe laquelle des revendications précédentes, caractérisé en ce que l'autre extrémité de l'organe élastique (26) est reliée à un corps (27) qui est agencé de manière à tourner autour de l'axe vertical (5) par rapport au support.

7. Dispositif tel que revendiqué dans la revendication 6, caractérisé en ce que ledit corps est constitué par un anneau (27), qui reçoit toutes les autres extrémités (26) des organes élastiques.

8. Dispositif tel que revendiqué dans n'importe laquelle des revendications précédentes, caractérisé en ce que l'organe élastique est constitué par un ressort hélicoïdal.

9. Dispositif tel que revendiqué dans la revendication 8, caractérisé en ce que les spires du ressort hélicoïdal s'étendent autour du manchon (16).

10. Dispositif tel que revendiqué dans la revendication 9, caractérisé en ce que l'extrémité supérieure du ressort hélicoïdal est centrée au moyen d'un corps de centrage (70) qui est fixé sur la partie extrême supérieure de l'axe (11).

11. Dispositif tel que revendiqué dans n'importe laquelle des revendications précédentes, caractérisé en ce que dans une paire de dents superposées (22a, 22b), la dent supérieure (22b) est fixée de manière amovible au-dessus de la dent inférieure (22a) au moyen d'une platine de serrage (64).

12. Dispositif tel que revendiqué dans la revendication 11, caractérisé en ce que la platine de serrage est munie d'un trou traversant en forme de fente (63) à travers lequel est insérée la dent supérieure (22b).

13. Dispositif tel que revendiqué dans les revendications 11 et 12, caractérisé en ce que ladite platine de serrage (64) est munie d'une partie emboutie (65) qui s'engage dans un trou traversant de la dent supérieure (22b), de sorte que cette platine de serrage peut s'appuyer au-dessus de la dent inférieure (22a).

14. Dispositif tel que revendiqué dans n'importe laquelle des revendications précédentes, carac-

térisé en ce que le support (6) est muni de deux éléments annulaires (10—12) qui sont disposés l'un au-dessus de l'autre et dans lesquels sont fixées les extrémités des axes verticaux.

15. Dispositif tel que revendiqué dans la revendication 14, caractérisé en ce que l'élément annulaire supérieure (12) est formé par la bride périphérique d'un capot fermé (13).

16. Dispositif tel que revendiqué dans n'importe laquelle des revendications précédentes et comprenant un patin (8) à l'extrémité inférieure de l'arbre vertical (5), caractérisé en ce que ce patin peut être déplacé suivant la direction de la hauteur par rapport à cet arbre vertical (5).

17. Dispositif tel que revendiqué dans la revendication 16, caractérisé en ce que le patin (8) est relié au moyen d'une articulation (34, 35) à l'extrémité inférieure de l'arbre vertical.

18. Dispositif tel que revendiqué dans les revendications 16 et 17, caractérisé en ce que, considéré suivant la direction de déplacement, l'axe de pivotement d'articulation (35) est disposé en avant de l'arbre vertical (5).

19. Dispositif tel que revendiqué dans les revendications 16 à 18, caractérisé en ce qu'un élément de verrouillage (42) est disposé au centre du patin (8) ou à son voisinage.

## Patentansprüche

1. Vorrichtung zum Bearbeiten von Erntegut, das auf dem Erdboden liegt, mit wenigstens einem Träger (6), der drehbar um eine aufrechte Welle (5) angetrieben wird und eine Mehrzahl stehender Wellenstümpfe (11) aufweist, die in einem Kreis darauf angeordnet sind, und um jeden von denen ein oder mehrere Zinken (22, 25) schwenkbar sind, in überlagernder Stellung gehalten mit Einstellung in einer auswärts gerichteten Stellung durch ein unabhängiges federndes Element (20, 51), von welchem ein Ende an einer gemeinsamen Halterung der Zinken (7) befestigt ist, während das andere Ende in verschiedenen Winkelstellungen bezüglich des Wellenstumpfes einstellbar ist, dadurch gekennzeichnet, daß an jedem stehenden Wellenstumpf (11), welcher an dem Träger befestigt ist, wenigstens die unterste Zinke (22) um einen horizontalen Stift (19, 19') schwenkbar ist, der an der gemeinsamen Halterung der Zinken angeordnet ist, wobei die gemeinsame Halterung eine um den stehenden Wellenstumpf (11) drehbare Hülse (16) ist, welche Anbringung eine freie Bewegung der Zinke in der vertikalen Ebene zuläßt.

2. Vorrichtung nach Anspruch 1, dadurch gekennzeichnet, daß die unterste Zinke (22) oder ihre Verlängerung sich oberhalb des Schwenkstiftes (19) erstreckt, und daß ein Anschlag (21, 50; 62) an der Hülse vorgesehen ist.

3. Vorrichtung nach Ansprüchen 1 bis 2, dadurch gekennzeichnet, daß die oder jede Zinke (22, 25) so an der Hülse (16) befestigt ist, daß sie austauschbar ist.

4. Vorrichtung nach Ansprüchen 1 bis 3, dadurch gekennzeichnet, daß die Hülse (16), die um den stehenden Wellenstumpf (11) drehbar ist, durch zwei oder mehr nichtdrehbar untereinander verbundene Teile (16', 16") gebildet wird, die aufeinander stehen, wobei die oberen Zinken (25) an den oberen Teilen (16") befestigt sind, falls erforderlich.

5. Vorrichtung nach Anspruch 4, dadurch gekennzeichnet, daß ein oberes Hülsenteil (16") und eine damit verknüpfte obere Zinke (25) einteilig aus einem Kunstharz hergestellt sind.

6. Vorrichtung nach einem der vorhergehenden Ansprüche, dadurch gekennzeichnet, daß das andere Ende des federnden Elementes (26) mit einem Körper (27) verbunden ist, der dafür vorgesehen ist, sich um die aufrechte Welle (5) bezüglich des Trägers zu drehen.

7. Vorrichtung nach Anspruch 6, dadurch gekennzeichnet, daß der Körper durch einen Ring (27) gebildet wird, der alle anderen Enden (26) der federnden Einrichtungen aufnimmt.

8. Vorrichtung nach einem der vorhergehenden Ansprüche, dadurch gekennzeichnet, daß das federnde Element durch eine Schraubenfeder gebildet wird.

9. Vorrichtung nach Anspruch 8, dadurch gekennzeichnet, daß die Windungen der Schraubenfeder um die Hülse (16) herum verlaufen.

10. Vorrichtung nach Anspruch 9, dadurch gekennzeichnet, daß das obere Ende der Schraubenfeder mittels eines Zentrierkörpers (70) zentriert ist, der an dem oberen Endabschnitt des Wellenstumpfes (11) befestigt ist.

11. Vorrichtung nach einem der vorhergehenden Ansprüche, dadurch gekennzeichnet, daß in einem Paar-überlagerter Zinken (22a, 22b) die obere Zinke (22b) lösbar auf der unteren Zinke (22a) mittels einer Klemmplatte (64) befestigt ist.

12. Vorrichtung nach Anspruch 11, dadurch gekennzeichnet, daß die Klemmplatte mit einem schlitzartigen Durchgangsloch (63) versehen ist, durch welches hindurch die obere Zinke (22b) eingefügt ist.

13. Vorrichtung nach Anspruch 11 und 12, dadurch gekennzeichnet, daß die Klemmplatte (64) mit einer Vertiefung (65) versehen ist, welche in ein Durchgangsloch der oberen Zinke (22b) hineinpaßt, so daß die Klemmplatte darauf eingerichtet ist, auf der unteren Zinke (22a) zu liegen.

14. Vorrichtung nach einem der vorhergehenden Ansprüche, dadurch gekennzeichnet, daß der Träger (6) mit zwei ringförmigen Elementen (10 bis 12) versehen ist, die übereinander angeordnet sind, in welchen die Enden der stehenden Wellenstümpfe befestigt sind.

15. Vorrichtung nach Anspruch 14, dadurch gekennzeichnet, daß das obere ringförmige Element (12) der Umfangsflansch einer geschlossenen Haube (13) ist.

16. Vorrichtung nach einem der vorhergehenden Ansprüche, mit einem Gleitschuh (8) an dem unteren Ende der aufrechten Welle (5), dadurch gekennzeichnet, daß der Gleitschuh in der Höhenrichtung bezüglich der aufrechten Welle (5) verschiebbar ist.

17. Vorrichtung nach Anspruch 16, dadurch gekennzeichnet, daß der Gleitschuh (8) mittels eines Scharniers (34, 35) mit der unteren Seite der aufrechten Welle verbunden ist.

18. Vorrichtung nach den Ansprüchen 16 und 17, dadurch gekennzeichnet, daß in der Bewegungsrichtung betrachtet die Scharnierschwenkwelle (35) vor der aufrechten Welle (5) angeordnet ist.

19. Vorrichtung nach den Ansprüchen 16 bis 18, dadurch gekennzeichnet, daß ein Verriegelungsglied (42) bei oder nahe dem Zentrum des Gleitschuhs (8) angeordnet ist.

FIG.1

FIG.8

0 042 195

FIG.2

FIG.4

FIG.3

FIG.5

FIG.6

FIG.7